# EUROPÄISCHE PATENTSCHRIFT

(11) **EP 1 283 536 B1**
(45) Veröffentlichungstag und Bekanntmachung des Hinweises auf die Patenterteilung: **06.09.2006**
(21) Anmeldenummer: 02017428.0
(22) Anmeldetag: 03.08.2002
(51) Int. Cl.: B29C 45/14, H01H 11/06

(54) **Elektrisches Gerät mit einer Wandung aus Kunststoff, umfassend zumindest einen flexiblen Leiter, sowie ein Verfahren zur Herstellung enes solchen elektrischen Gerätes**
Electrical device with a plastic wall,comprising at least one flexible conductor, and a method for producing such an electrical device
Appareil électrique avec une paroi en plastique enrobant au moins un conducteur flexible et procédé de fabrication d'un tel appareil

(30) Priorität: 10.08.2001 DE 10139577
(43) Veröffentlichungstag der Anmeldung: 12.02.2003
(73) Patentinhaber: Carl Freudenberg KG, 69469 Weinheim (DE)
(72) Erfinder: Trogisch, Günter, 64342 Seeheim-Jugenheim (DE); Schäfer, Peter, 64297 Darmssadt-Eberstadt (DE); Plötz, Stefan, 58640 Iserlohn (DE); Quarder, Martin, 32425 Minden (DE)

(56) Entgegenhaltungen:
- EP-A- 0 260 681
- EP-A- 0 904 920
- EP-A- 1 085 787
- DE-A- 19 609 253
- DE-A- 19 810 428
- FR-A- 2 144 034

## Beschreibung

Die Erfindung betrifft ein elektrisches Gerät, umfassend zumindest einen flexiblen Leiter, sowie ein Verfahren zur Herstellung eines solchen elektrischen Gerätes, nach dem Oberbegriff der Patentansprüche 1 und 12.

Flexible Leiter, die insbesondere als elektrische Strom- oder Datenleiter verwendet werden, sind für unterschiedliche Anwendungen im Einsatz. Neben sogenannten blanken Leitern, die keine äußere Isolationsschicht tragen, sind insbesondere Leiter mit einer isolierenden Schicht üblich. Unabhängig davon kann der Leiter an der äußeren Oberfläche entweder eine flexible oder eine starre Schicht tragen, beispielsweise eine Ummantelung aus Kunststoff, die insbesondere als Schutz gegen mechanische Beanspruchungen dient.

### Stand der Technik

Aus der DE 196 09 253 ist ein Verfahren zum Spritzgießen von Kunststoffteilen mit einem im isolierenden Kunststoffteil eingespritzten elektrischen Leiter, der u.a. flexibel ausgeführt sein kann, bekannt. Der elektrische Leiter weist nur an den Enden eine elektrische Kontaktstelle auf. Bei diesem Verfahren wird ein blanker Leiter mit einem bestimmten Teil seiner Länge in den Formraum einer offenen Werkzeugform eingelegt und dort vor Beginn des Einspritzvorganges mechanisch vorfixiert. Zusätzlich werden bei dieser Lösung für die mechanische Vorfixierung des Leiters weitere Fixierpunkte, sog. Wechselfixierpunkte, genutzt. Diese Lösung eignet sich allein für elektrische Leiter, bei denen eine vollständige Einbettung des Leiters gewährleistet sein muss. Der elektrische Leiter weist nur an seinen Enden einen elektrischen Kontakt auf.

Für Anwendungsfälle, in denen nur eine teilweise Einbettung, insbesondere ein örtlich definiertes Fehlen der Einbettung zu gewährleisten ist, versagt diese Lösung.

### Darstellung der Erfindung

Aufgabe der Erfindung ist es, ein elektrisches Gerät der eingangs genannten Art zu zeigen, das zumindest einen flexiblen Leiter mit einer elektrisch isolierenden Einbettung und einer beliebig großen Anzahl elektrischer Kontaktfelder aufweist, sowie ein preisgünstiges Verfahren zur Herstellung eines solchen Gerätes.

Diese Aufgabe wird dadurch gelöst, dass die Einbettung von den Kontaktfeldern auf der der Oberfläche zugewandten Seite der Wandung entfernt ist und dass die Kontaktfelder die Oberfläche der Wandung begrenzen.

Kontaktfelder im Sinne der Erfindung sind übliche Kontaktpunkte, die zwischen elektrischen Strom- und/oder Datenleitern und sekundären elektrischen Bauteilen beziehungsweise -elementen, zum Beispiel einem Halbleiterbaustein, einem Sensor, einem Signalgeber, einem Schalter oder einem Gerätestecker, insbesondere zum Zwecke der Strom- und/oder Datenübertragung, angeordnet sind.

Das Verbinden dieser Teile in körperlicher Hinsicht erfolgt dabei in üblicher Art und Weise, so dass insbesondere eine Strom- und/oder Datenübertragung zwischen diesen Teilen gewährleistet ist.

Eine vorteilhafte Ausgestaltung der Erfindung stellt darauf ab, dass zumindest ein Kontaktfeld vorgesehen ist, das das Oberflächenniveau der benachbarten Wandung überragt. Diese Anordnung des Kontaktfeldes ermöglicht eine besonders ökonomische Herstellung des erfindungsgemäßen Gerätes, da der flexible Leiter in eine Vertiefung im Innenraum des Formwerkzeuges vor dem Einbringen des Kunststoffes gedrückt wird, was den Aufwand für das nachfolgende Fixieren des flexiblen Leiters minimiert.

Ist das erfindungsgemäße Gerät ein elektrisches Gerät, bei dem regelmäßig mehrere Kontaktfelder an der äußeren Oberfläche des Gehäuses angeordnet sind, wie beispielsweise die Kontaktfelder für die Tastatur eines Telefons, ist die vorgenannte Anordnung besonders zweckmäßig.

Bevorzugt wird weiterhin, dass die Wandung hart und formstabil ausgebildet ist. Diese Gestaltung gewährleistet eine hohe mechanische Beanspruchbarkeit des Gerätes.
Der Kunststoff, der im Rahmen der Erfindung bevorzugt als Basismaterial für die Einbettung verwendet wird, besitzt regelmäßig elektrisch isolierende Eigenschaften. Ein Kunststoff, der diese Eigenschaft sekundär oder überhaupt nicht aufweist, wird alternativ beansprucht. Weiterhin wird ein Kunststoff bevorzugt, der nach dem Spritzgussverfahren verarbeitbar ist, wobei ein geschäumter Kunststoff grundsätzlich ebenso im Rahmen der Erfindung einsetzbar ist.

Außerdem wird die Aufgabe der Erfindung durch ein Verfahren zur Herstellung eines elektrischen Gerätes nach einem der Ansprüche 1 bis 11 gelöst, bei dem ein flexibler Leiter in den Formraum einer offenen Werkzeugform eingelegt und vor Beginn des Einspritzvorganges mechanisch fixiert wird und der verbleibende Freiraum des Formraums nach dem Schließen mit flüssigem Kunststoff gefüllt wird, wonach der Kunststoff verfestigt, der Formraum geöffnet und das Gerät entnommen wird, wobei der Leiter nur im Bereich von Kontaktfeldern dichtend und unverrückbar mit der Innenwand des Formraums verpresst und an den übrigen Stellen in einem Abstand von der Innenwand gehalten wird.

Wesentlich für die erfindungsgemäße Lösung ist, dass der flexible elektrische Leiter dort, wo die entsprechenden Kontaktfelder vorgesehen sind, möglichst konturenscharf und dicht bezüglich des Eindringens von flüssigem Kunststoff und/oder anderer Medien beim Spritzgießen beziehungsweise schäumbarem Kunststoff und/oder anderer Medien beim Schäumen an die Innenwand der Werkzeugform angepresst wird. Die mechanische Vorfixierung ist dabei erfindungsgemäß so ausgelegt, dass das vorbeschriebene Anpressen zumindest bis zum formstabilen Erstarren des Kunststoffes stattfindet. Zumindest während des Einbringens des Kunststoffes in den verbliebenen Innenraum des Formwerkzeuges in an sich bekannter Art und Weise können Mittel permanent, zeitweilig oder abwechselnd das Positionieren, das heißt insbesondere das Halten des flexiblen Leiters in der gewünschten Lage und/oder die sichere Fixierung in dieser Lage, realisieren.

Bevorzugt wird, dass zumindest ein Teil der Mittel zum Anpressen mechanische Andrückmittel sind. Weitere Mittel im Sinne der Erfindung sind hydraulische Mittel, wie zum Beispiel hydraulische Druckzylinder, aber auch Einspritzdüsen beziehungsweise Einspritzdüsensysteme für das Einbringen des flüssigen Kunststoffes und/oder anderer Medien, wie beispielsweise Druckluft, in den Innenraum des Formwerkzeuges. Besonders zweckmäßig ist, den mittels Düsen eingebrachten Masse- und/oder Medienstrom als Mittel im vorgenannten Sinne zumindest teilweise zu verwenden.

Weitere Mittel im Sinne der Erfindung sind physikalische Felder, wie beispielsweise Magnetfelder, die das Anpressen des flexiblen Leiters an die Innenseite des Formwerkzeuges zumindest zeitweise bewirken beziehungsweise unterstützen. Alternativ kann durch ein zeitweiliges Anlegen von Unterdruck das gewünschte Anpressen realisiert werden. Diese vorgenannte Aufzählung von Mitteln ist nicht als abschließend anzusehen.

### Kurzbeschreibung der Zeichnung

Ein Ausführungsbeispiel der Erfindung wird im Folgenden anhand der Zeichnungen näher erläutert.

Es zeigen:
- Fig. 1: die schematische Seitenansicht eines elektrischen Gerätes und eine schematische Teilansicht einer offenen Werkzeugform,
- Fig. 2: die schematische Seitenansicht eines elektrischen Gerätes mit einem Hohlraum.

### Ausführung der Erfindung

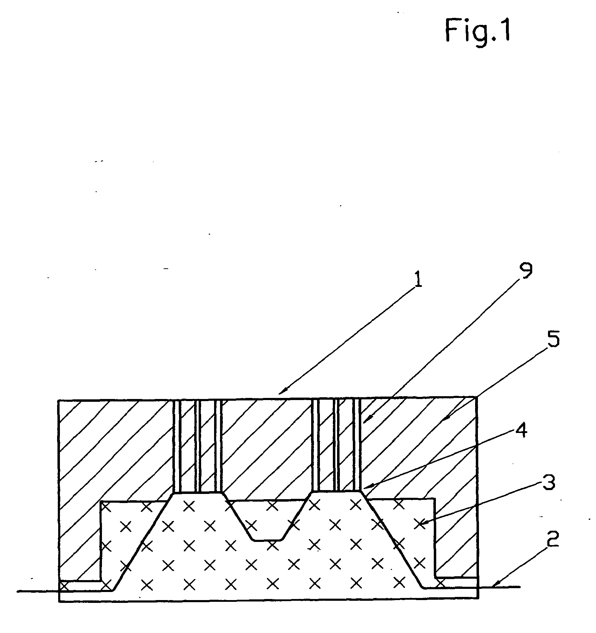

In der Figur 1 ist ein elektrisches Gerät 1, welches zumindest einen flexiblen elektrischen Leiter 2 umfasst, der in den thermoplastischen Kunststoff teilweise eingebettet und durch diese Einbettung 3 in seiner Form fixiert ist, dargestellt. Dieses elektrische Gerät 1 besitzt zwei elektrische Kontaktfelder 4, die durch Bestandteile des flexiblen elektrischen Leiters 2 gebildet sind.

Der flexible elektrische Leiter 2 ist nur außerhalb der Kontaktfelder 4 von der Einbettung 3 umschlossen. Der Leiter 2 ist als ein sogenannter blanker Leiter ausgebildet, mit dem in üblicher Art und Weise elektrische Bauelemente, wie beispielsweise ein Tastenelement einer Tastatur eines Telefons, elektrisch leitend miteinander verbunden werden können. Im Bereich der elektrischen Kontaktfelder 4 überragen diese das Oberflächenniveau der benachbarten Einbettung 3 bzw. das Niveau der Wandung 6, insbesondere in dem Fall, wie in Figur 1 dargestellt, in dem sich die Einbettung 3 und die Wandung 6 entsprechen. In der Werkzeugform 5 sind zwei mit der Form der Kontaktfelder 4 korrespondierende Vertiefungen im Innenraum angeordnet. An diesen zwei Vertiefungen sind in der Werkzeugform 5, in Figur 1 schematisch dargestellt, jeweils drei Kanäle 9 zum Anlegen von Vakuum angeordnet. Dieses elektrische Gerät 1 wird in der industriellen Fertigung durch die folgenden Verfahrensschritte hergestellt: In den Formraum einer offenen Werkzeugform 5 eines Spritzgusswerkzeuges wird ein flexibler elektrischer Leiter 2 eingelegt und mittels üblicher Mittel, insbesondere Haltemittel, in Fig. 1 nicht dargestellt, vorfixiert. Nachfolgend wird die Werkzeugform 5 geschlossen und mittels mechanischer Mittel, beispielsweise mechanischer Andrückmittel, in Fig. 1 nicht dargestellt, der Teil des flexiblen elektrischen Leiters 2, der die Kontaktfelder 4 trägt, an die Innenwand der Werkzeugform 5 angedrückt. Zeitgleich und/oder nachfolgend wird über die Kanäle 9 an die an der Innenwand der Werkzeugform 5 bereits teilweise anliegenden Kontaktfelder 4 ein Vakuum angelegt, so dass dann, zumindest während des Einbringens des flüssigen thermoplastischen Kunststoffes in den verbliebenen Formraum, ein dichtendes Anpressen der zwei elektrischen Kontaktfelder 4 an die Innenwand der Werkzeugform 5 realisiert und gesichert ist.

Nach dem vollständigen Füllen des verbliebenen Innenraumes des Formraumes mit Kunststoff wird die Werkzeugform 5 nach dem formstabilen Erstarren des Kunststoffes geöffnet und das elektrische Gerät 1 aus dem Spritzgusswerkzeug entfernt. Die vorgenannten einzelnen Verfahrensschritte sind in üblicher Art und Weise auf der Basis der bekannten Spritzgusstechnologie modifizierbar.

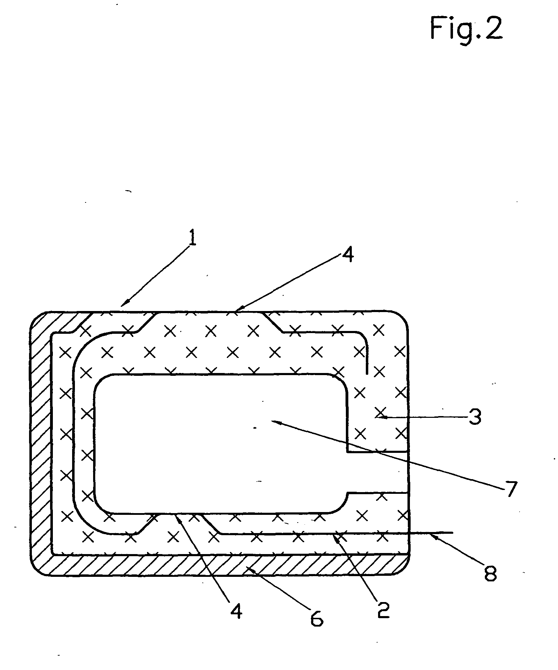

In Figur 2 ist ein erfindungsgemäßes elektrisches Gerät 1 dargestellt. Dieses Gerät 1 besitzt einen Hohlraum 7, der zumindest teilweise durch die Wandung 6 und die Einbettung 3 umschlossen wird. Der flexible Leiter 2 ist, außer im Bereich der Kontaktfelder 4, in der elektrisch isolierenden Einbettung 3 angeordnet. Die Einbettung 3 besteht aus einem thermo- oder duroplastischen Kunststoff, der geschäumt oder gespritzt sein kann.

Der hervorstehende Schwanz 8 kann mit einer elektrisch leitenden Steckverbindung o.ä. versehen sein.

Das elektrische Gerät 1 besitzt zwei elektrische Kontaktfelder 4, die auf dem flexiblen elektrischen Leiter 2 im Bereich beider Oberflächen der Wandung 6, das heißt außen beziehungsweise zum Hohlraum 7 hin, angeordnet sind. Im Bereich der elektrischen Kontaktfelder 4 trägt der flexible elektrische Leiter 2 keine Einbettung 3 aus Kunststoff. Die Kontaktfelder 4 dienen der elektrischen Verbindung zu elektrischen Bauelementen, wie beispielsweise einem Halbleiterbaustein, in Fig. 2 nicht dargestellt, die ihrerseits über den Leiter 2 elektrisch leitend miteinander verbunden sind. Das Oberflächenniveau der elektrischen Kontaktfelder 4 schließt bündig an die benachbarten Oberflächen der Einbettung 3 an. Die gewählte Anordnung der Kontaktfelder 4 ermöglicht es, ein erstes Bauelement, das im Hohlraum (7) angeordnet ist, mittels des Leiters (2) mit einem zweiten Bauelement elektrisch leitend zu verbinden.

## Patentansprüche

1. Elektrisches Gerät mit einer Wandung aus Kunststoff, umfassend zumindest einen flexiblen Leiter (2), der eine elektrisch isolierende Einbettung (3) trägt, der in die Wandung (6) eingebettet ist und mehrere elektrische Kontaktfelder (4) aufweist, **dadurch gekennzeichnet, dass** die Einbettung (3) von den Kontaktfeldern (4) auf der der Oberfläche zugewandten Seite der Wandung (6) entfernt ist und dass die Kontaktfelder (4) die Oberfläche der Wandung (6) begrenzen.

2. Gerät nach Anspruch 1, **dadurch gekennzeichnet, dass** zumindest ein Kontaktfeld (4) vorgesehen ist, das das Oberflächenniveau der benachbarten Oberfläche der Wandung (6) bzw. Einbettung (3) überragt.

3. Gerät nach Anspruch 1 oder 2, **dadurch gekennzeichnet, dass** zumindest ein Kontaktfeld (4) vorgesehen ist, das das Oberflächenniveau der benachbarten Oberfläche der Wandung (6) bzw. der Einbettung (3) bündig begrenzt.

4. Gerät nach einem der Ansprüche 1 bis 3, **dadurch gekennzeichnet, dass** im Bereich beider Oberflächen der Wandung (6) Kontaktfelder (4) vorgesehen sind.

5. Gerät nach einem der Ansprüche 1 bis 4, **dadurch gekennzeichnet, dass** der Leiter (2) zumindest eine Oberfläche der Wandung (6) bzw. der Einbettung (3) mit zumindest einem Schwanz (8) durchdringt.

6. Gerät nach einem der Ansprüche 1 bis 5, **dadurch gekennzeichnet, dass** die Wandung (6) bzw. die Einbettung (3) einen Hohlraum (7) zumindest anteilig umschließt.

7. Gerät nach Anspruch 6, **dadurch gekennzeichnet, dass** ein erstes Bauelement, das in dem Hohlraum (7) angeordnet ist, mittels des Leiters (2) mit einem zweiten Bauelement elektrisch leitend verbunden ist.

8. Gerät nach Anspruch 6 und/oder 7, **dadurch gekennzeichnet, dass** die Wandung (6) hart und formstabil ausgebildet ist.

9. Gerät nach einem der Ansprüche 1 bis 8, **dadurch gekennzeichnet, dass** die Wandung (6) elektrisch isolierend ausgebildet ist.

10. Gerät nach einem der Ansprüche 1 bis 9, **dadurch gekennzeichnet, dass** die Wandung (6) aus einem geschäumten und/oder spritzgegossenen Kunststoff besteht.

11. Gerät nach einem der Ansprüche 1 bis 10, **dadurch gekennzeichnet, dass** die Kontaktfelder (4) mit zumindest einem Halbleiterbaustein, einem Sensor, einem Signalgeber, einem Schalter und/oder einem Gerätestecker bestückt sind.

12. Verfahren zur Herstellung eines elektrischen Gerätes (1) nach einem der Ansprüche 1 bis 11, bei dem ein flexibler Leiter (2) in den Formraum einer offenen Werkzeugform (5) eingelegt und vor Beginn des Einspritzvorganges mechanisch fixiert wird und der verbleibende Freiraum des Formraums nach dem Schließen mit flüssigem Kunststoff gefüllt wird, wonach der Kunststoff verfestigt, der Formraum geöffnet und das Gerät (1) entnommen wird, **dadurch gekennzeichnet, dass** der Leiter (2) nur im Bereich von Kontaktfeldern (4) dichtend und unverrückbar mit der Innenwand des Formraums verpresst und an den übrigen Stellen in einem Abstand von der Innenwand gehalten wird.

13. Verfahren nach Anspruch 12, **dadurch gekennzeichnet, dass** das Anpressen durch mechanische Andrückmittel, Magnetfelder und/oder Unterdruck bewirkt wird.

14. Verfahren nach Anspruch 13, bei dem ein Spritzgießverfahren zum Befüllen des Formraums verwendet wird, **dadurch gekennzeichnet, dass** das Anpressen durch die aus den Anspritzdüsen eintretende Kunststoffmasse zumindest anteilig bewirkt wird.

## Claims

1. Electrical device with a plastic wall, comprising at least one flexible conductor (2), which bears an electrically insulating embedding (3), which is embedded in the wall (6) and has a number of electrical contact areas (4), **characterized in that** the embedding (3) is removed from the contact areas (4) on the side of the wall (6) that is facing the surface and **in that** the contact areas (4) bound the surface of the wall (6).

2. Device according to Claim 1, **characterized in that** at least one contact area (4) which rises above the surface level of the adjacent surface of the wall (6) or embedding (3) is provided.

3. Device according to Claim 1 or 2, **characterized in that** at least one contact area (4) which bounds the surface level of the adjacent surface of the wall (6) or of the embedding (3) in flush alignment is provided.

4. Device according to one of Claims 1 to 3, **characterized in that** contact areas (4) are provided in the region of both surfaces of the wall (6).

5. Device according to one of Claims 1 to 4, **characterized in that** the conductor (2) penetrates at least one surface of the wall (6) or of the embedding (3) with at least one tail (8).

6. Device according to one of Claims 1 to 5, **characterized in that** the wall (6) or the embedding (3) at least to some extent encloses a cavity (7).

7. Device according to Claim 6, **characterized in that** a first component, which is arranged in the cavity (7), is connected to a second component in an electrically conducting manner by means of the conductor (2).

8. Device according to Claim 6 and/or 7, **characterized in that** the wall (6) is formed such that it is hard and dimensionally stable.

9. Device according to one of Claims 1 to 8, **characterized in that** the wall (6) is formed such that it is electrically insulating.

10. Device according to one of Claims 1 to 9, **characterized in that** the wall (6) consists of an expanded and/or injection-moulded plastic.

11. Device according to one of Claims 1 to 10, **characterized in that** the contact areas (4) are fitted with at least one semiconductor device, a sensor, a signal transmitter, a switch and/or a device connector.

12. Method for producing an electrical device (1) according to one of Claims 1 to 11, in which a flexible conductor (2) is placed in the cavity of an open mould (5) and is mechanically fixed before the beginning of the injecting operation, and, after closing, the remaining free space of the cavity is filled with liquid plastic, after which the plastic is made to set, the cavity is opened and the device (1) is removed, **characterized in that** the conductor (2) is pressed together with the inner wall of the cavity in a sealing and immovable manner only in the region of contact areas (4) and at the other locations is kept at a distance from the inner wall.

13. Method according to Claim 12, **characterized in that** the pressing is brought about by mechanical pressing means, magnetic fields and/or negative pressure.

14. Method according to Claim 13, in which an injection-moulding process is used for filling the cavity, **characterized in that** the pressing is at least to some extent brought about by the polymer melt entering from the injection nozzles.

## Revendications

1. Appareil électrique muni d'une paroi en matière plastique, comprenant au moins un conducteur flexible (2), qui comporte un encastrement (3) électriquement isolant, lequel est encastré dans la paroi (6) et présente plusieurs bancs de contact électrique (4), **caractérisé en ce que** l'encastrement (3) est éloigné des bancs de contact (4) sur le côté de la paroi (6) qui fait face à la surface et que les bancs de contact (4) délimitent la surface de la paroi (6).

2. Appareil selon la revendication 1, **caractérisé en ce qu'**il est prévu au moins un banc de contact (4) qui dépasse du niveau de la surface voisine de la paroi (6) ou de l'encastrement (3).

3. Appareil selon la revendication 1 ou 2, **caractérisé en ce qu'**il est prévu au moins un banc de contact (4) qui délimite à fleur le niveau de la surface voisine de la paroi (6) ou de l'encastrement (3).

4. Appareil selon l'une des revendications 1 à 3, **caractérisé en ce que** des bancs de contact (4) sont prévus dans la zone des deux surfaces de la paroi (6).

5. Appareil selon l'une des revendications 1 à 4, **caractérisé en ce que** le conducteur (2) traverse au moins une surface de la paroi (6) ou de l'encastrement (3) avec au moins une queue (8).

6. Appareil selon l'une des revendications 1 à 5, **caractérisé en ce que** la paroi (6) ou l'encastrement (3) entoure au moins partiellement un espace creux (7).

7. Appareil selon la revendication 6, **caractérisé en ce qu'**un premier composant qui est disposé dans l'espace creux (7) est relié électriquement avec un deuxième composant au moyen du conducteur (2).

8. Appareil selon la revendication 6 et/ou 7, **caractérisé en ce que** la paroi (6) est réalisée dure et indéformable.

9. Appareil selon l'une des revendications 1 à 8, **caractérisé en ce que** la paroi (6) est réalisée électriquement isolante.

10. Appareil selon l'une des revendications 1 à 9, **caractérisé en ce que** la paroi (6) se compose d'une matière plastique expansée et/ou moulée par injection.

11. Appareil selon l'une des revendications 1 à 10, **caractérisé en ce que** les bancs de contact (4) sont équipés d'au moins un composant semiconducteur, un capteur, un générateur de signal, un commutateur et/ou une embase de connexion.

12. Procédé pour fabriquer un appareil électrique (1) selon l'une des revendications 1 à 11, avec lequel un conducteur flexible (2) est inséré dans l'espace de moulage d'un moule d'outil ouvert (5) et fixé mécaniquement avant le début de l'opération d'injection et l'espace libre restant dans l'espace de moulage est rempli après la fermeture de matière plastique liquide, après quoi la matière plastique est solidifiée, l'espace de moulage est ouvert et l'appareil (1) est extrait, **caractérisé en ce que** le conducteur (2) est comprimé avec la paroi intérieure de l'espace de moulage de manière à être étanche et immobile uniquement dans la zone des bancs de contact (4) et, aux autres endroits, il est maintenu à une certaine distance de la paroi intérieure.

13. Procédé selon la revendication 12, **caractérisé en ce que** l'application par pressage est effectué par des moyens de pressage mécaniques, un champ magnétique et/ou une dépression.

14. Procédé selon la revendication 13, avec lequel un procédé de moulage par injection est employé pour remplir l'espace de moulage, **caractérisé en ce que** l'application par pressage est effectué au moins partiellement par la masse de matière plastique qui pénètre par les buses d'injection.
